# FASCICULE DE BREVET EUROPEEN

(11) **EP 1 912 309 B1**
(45) Date de publication et mention de la délivrance du brevet: **09.03.2011**
(21) Numéro de dépôt: 07360043.9
(22) Date de dépôt: 05.10.2007
(51) Int. Cl.: H02K 5/22, H02K 7/116

(54) **Boîtier de regroupement et son utilisation**
Gruppiergehäuse und derartige Verwendung
Grouping box and method of using such a box

(30) Priorité: 13.10.2006 FR 0609010
(43) Date de publication de la demande: 16.04.2008
(73) Titulaire: MANTION S.A., 25006 Besancon (FR)
(72) Inventeur: Schnoebelen, Denis, 25006 Besancon (FR)
(74) Mandataire: Munier, Laurent

(56) Documents cités:
- EP-A1- 0 328 053
- WO-A-01/77479
- DE-U1- 20 201 325
- JP-A- 2003 138 871

## Description

La présente invention concerne et s'inscrit dans le domaine des applications électroniques à des éléments moteurs électromécaniques, plus particulièrement au domaine de motorisation automatisée et contrôlée de panneaux coulissants tels que volets coulissants.

En premier lieu, l'invention a pour objet un boîtier de regroupement.

De manière générale, l'homme du métier trouvera les moyens électroniques de pilotage pour des ensembles électromécaniques. Les dispositifs d'incrémentation de moteurs électriques et les dispositifs d'alimentation de secours sont connus en soi.

Dans l'art antérieur, l'utilisation desdits moyens dans un système de volets coulissants motorisés montre que l'alimentation de l'ensemble de motorisation 12 volts utilise un boîtier départ comportant des moyens de connexion et de transformation. Il était installé à l'intérieur d'un local et nécessitait des modifications de l'ouvrage s'il y avait volonté de le dissimuler plutôt que de le fixer en applique.

Les moyens de secours d'alimentation autonome via des batteries ne sont pas réalisés et utilisés, car nécessitant un nombre certain de batteries encombrantes et peu esthétiques pour des manoeuvre sous 12 volts, les motorisations sous 6 volts n'étant pas utilisées dans les applications de systèmes motorisés de panneaux coulissants.

Quant aux moyens électroniques de paramétrage, de contrôle et de secours, l'art antérieur montre que certaines motorisations avaient sommairement intégré l'une ou l'autre des fonctions de commande fin de course d'opération. Ces moyens étaient extérieurs déportés de l'ensemble moteur.

Il y a peu d'évolution dans ce secteur pour des applications du genre, de sorte que la mise en oeuvre de système de panneaux coulissants motorisés reste une opération de spécialistes ou de professionnels. Esthétiquement, il était difficile de camoufler d'encombrants dispositifs. Quand ces derniers étaient placés à l'extérieurs, les intempéries mettaient souvent les dispositifs hors d'usage. Les facteurs chaleur et étanchéité et l'emplacement du dispositif constituent un handicap réel et sérieux pour la pérennité de tels équipements.

L'objectif de l'invention est de résoudre les problèmes posés d'une part et d'autre part de combler les manques, les absences de fonctions de commande, d'alimentation, en résumé d'apporter ce que les moyens électroniques et informatiques peuvent apporter à un système de panneaux coulissants motorisés.

Le but de l'invention est en conséquence de solutionner l'encombrement de l'alimentation à partir du réseau via un transformateur, d'apporter une alimentation autonome fiable, durable et contrôlée. En sus, l'invention résout la maîtrise du moteur par un moyen original d'incrémentation de sorte que ce dernier puisse être piloté automatiquement ou par des commandes volontaires au choix via des commandes filaires ou à distance. Enfin, le but ultime est de réunir tous les moyens en un seul boîtier comportant une carte mère pilotant toutes les zones fonctionnelles qui reflètent les fonctions et les services de l'ensemble.

Avantageusement, l'invention permet de réduire le nombre de composants et accessoires et propose une unité fonctionnelle et compacte facile d'installation et de d'utilisation avec la sécurisation, autant du matériel, des biens de l'occupant utilisateur en cas de tentative d'effraction, autant que des personnes.

L'invention, en concentrant le tout dans un boîtier, autorise ce dernier à pouvoir être joint avec un ensemble de motorisation lui conférant la capacité d'automatisme telle que commande, gestion, pilotage, sans y être limité. La compacité apporte la sécurité de la mise en oeuvre, car il suffit d'installer et de brancher. L'intelligence notable préserve l'ensemble des performances en apportant des préventions et des protections. Le tout est, de surcroît, étanche et inviolable. Installé avec un groupe de motorisation, il peut être rendu réversible et interchangeable avec ce dernier.

Par la document WO 01177479 A on connaît un boîtier de regroupement comprenant bornier de connexion interne, fils d'alimentation interrupteur transformateur, coques et une embase apte à former support de tout le dispositif. Cependant cette technologie connue présente des inconvénients. En particulier elle ne permet pas de commander l'unité motrice à distance. L'invention résout ce problème technique par des coques qui sertisent un brin d'antenne.

Aussi, la présente invention a pour but de résoudre les problèmes ci-dessus pour un boîtier de regroupement de dispositifs électriques pour au moins l'alimentation d'un moteur d'actionnement d'au moins un panneau coulissant comportant au moins un bomier de connexion interne, des fils d'alimentation, un brin d'antenne, les fils d'alimentation et le brin d'antenne étant reliés au bornier de connexion interne, et au moins un interrupteur pour ouvrir et fermer le circuit d'alimentation du moteur, au moins un transformateur (4) pour servir via un des fils d'alimentation (8) une basse tension d'alimentation audit moteur, un dispositif d'incrémentation sous forme d'un incrémenteur en ferrite de 16 pôles, et une aile de logement de l'incrémenteur conformée pour former un siège de positionnement indexé et un moyen de fixation du boîtier de regroupement à un boîtier de connexion connectable audit moteur, deux coques dont le mode de fermeture est étanche et inviolable, formant le carter de tout dispositif électrique et/ou électronique et dont sertissant les fils d'alimentation et le brin d'antenne, boîtier dont le raccordement audit bomier de connexion (3) interne et solidaire d'une embase unique inviolable, ladite embase étant apte à former support de tout dispositif électrique et/ou électronique et est rendue solidaire des parois internes des coques des carters une fois fermés, aux fins de constituer un ensemble unique autonome et former partie d'un ensemble de motorisation.

L'invention a encore pour objet l'utilisation d'un boîtier de regroupement conforme à la description ci-dessus.

Un exemple non limitatif de mis en oeuvre de la présente invention va être décrit au regard des figures annexées et telles que :
- La figure 1 représente un mode de réalisation de l'invention pour un ensemble de motorisation prêt à l'emploi.
- La figure 2 représente un écorché montrant les composants du boîtier électronique selon le mode de réalisation de la Fig. 1.

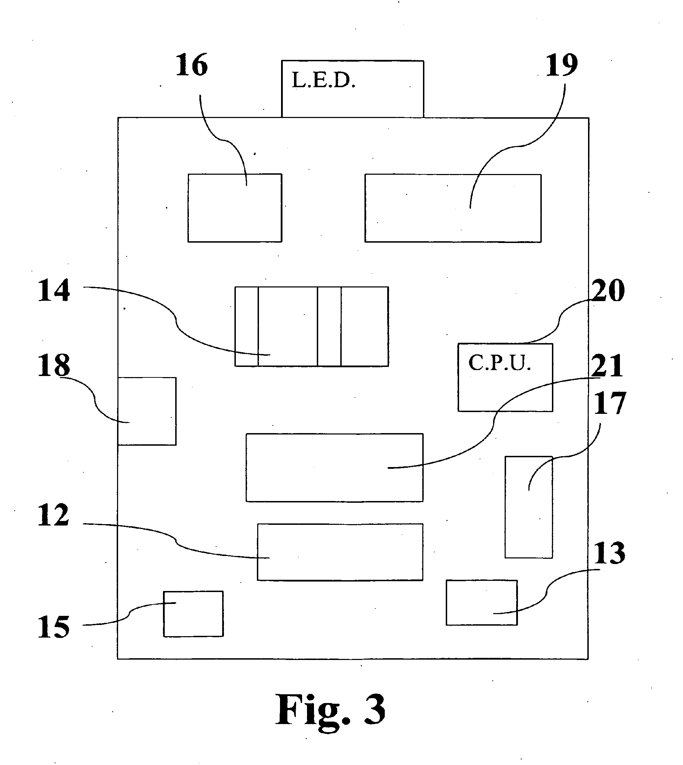

- La figure 3 représente la modélisation de la carte mère de la Fig. 2 avec les zones fonctionnelles.
- La figure 4 représente un second mode de réalisation pour le stockage électrique correspondant à la zone 12 de la Fig. 3.

Selon ces mêmes figures, l'invention conçoit et réalise un boîtier de regroupement 1 de dispositifs électriques pour au moins l'alimentation d'un moteur 2 d'actionnement d'au moins un panneau coulissant comportant au moins un bornier de connexion 3 interne, des fils d'alimentation 5,6,8 et au moins un interrupteur (non représenté) pour ouvrir et fermer le circuit d'alimentation du moteur et au moins un transformateur 4 pour servir via le fil 8 une basse tension d'alimentation dudit moteur 2.

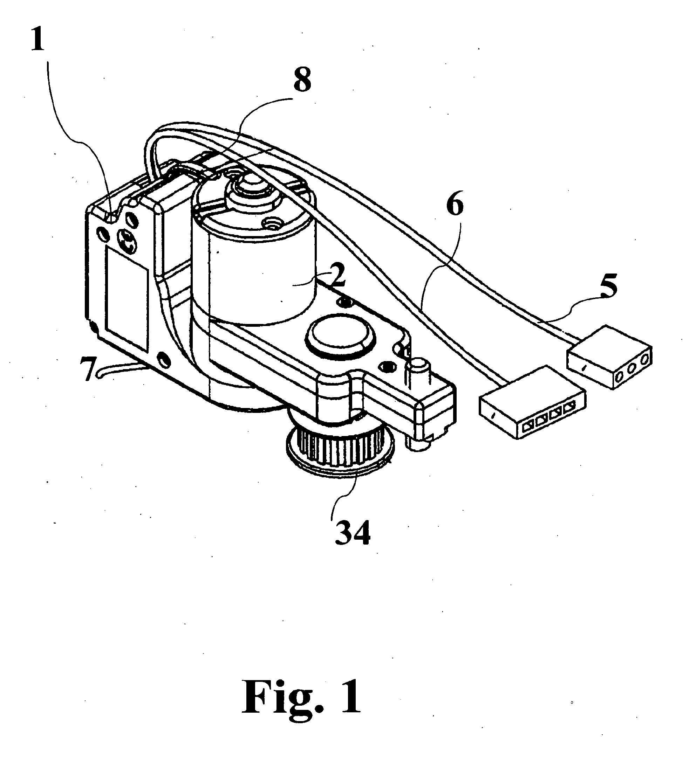

Selon la figure 1, le boîtier de regroupement 1 est réalisé au moyen de deux coques 1 a et 1b dont la fermeture étanche et inviolable provoque le sertissage des fils d'alimentation 5 du secteur et des fils d'alimentation de secours et de liaison 6 et des fils d'alimentation 8 du moteur 2 et des brins d'antenne 7.

Les fils d'alimentation 5 et de liaisons 6 sont connectés et sertis sur des prises femelles comportant des moyens détrompeurs pour assurer une connexion sans risque d'inversion de la connexion et ou d'interversion de fils. Les extrémités internes desdits fils sont reliées à des borniers connecteurs 3 solidaires d'une embase unique 10 apte à recevoir tout type de dispositifs électrique et/ou électronique. Les fils 5 et 6 raccordés au bornier 3 alimentant un transformateur 4 basse tension solidaires de l'embase 10 dont le courant est relayé via le fil 8 aux connecteurs des balais du moteur 2 et via un interrupteur (non représenté) pour ouvrir ou fermer le circuit d'alimentation basse tension du moteur 2.

L'invention comporte le boîtier de regroupement 1 formé de deux coques 1 a et 1b formant le carter de tout dispositif électrique et/ou électronique et dont le mode de fermeture est étanche et inviolable, sertissant les fils d'alimentation 5, 6 et 8, le brin d'antenne 7, et dont le raccordement à un bornier 3 interne est solidaire d'une embase unique 10 inviolable, ladite embase 10 étant apte à former support de tout dispositif électrique et/ou électronique et est rendue solidaire des parois internes des coques des carters 1a et 1b une fois fermés, aux fins de constituer un ensemble unique autonome et former partie d'un ensemble de motorisation.

Selon la Fig. 1, l'embase 10 forme carte mère 9 et circuit entre les dispositifs électriques et électroniques identifiables par des zones fonctionnelles 11 auxquelles lesdits dispositifs correspondent. Une zone fonctionnelle 11 comporte le circuit, les composants mécaniques, électriques et électroniques permettant selon le cas l'ouverture ou la fermeture de circuits, la réception, le stockage, le traitement, l'émission de données pour gérer, contrôler, commander, piloter les dispositifs correspondants et/ou les dispositifs associés et/ou l'alimentation du moteur 2 par exemple. Ainsi conçue, la carte mère 10 comporte les différentes zones 11 programmables ou non suivantes
- la zone 12 d'alimentation de secours du moteur 2, alimentation en énergie provenant des batteries ou de panneaux solaires ;
- la zone 13 de contrôle de la charge et décharge de l'alimentation de la batterie avec l'énergie électrique du réseau et/ou de panneaux solaires, de pilotage des sécurités de l'ensemble batterie de secours, courants, température, tensions entrée et de sortie ;
- la zone 14 comportant un moyen émetteur de lumière dit L.E.D. de signalisation de dysfonctionnement ou de besoin de maintenance, un bouton poussoir de programmation d'initialisation des courses et de la durée des courses des panneaux coulissants, comportant une sonde de température ambiante des batteries et du moteur aux fins d'éviter des surchauffes par surtension ou exposition anormale aux rayonnements solaires ;
- la zone 15 d'alimentation réseau du moteur 2 et du transformateur 6 volts courant continu et de contrôle de stabilité de la charge et de la tension ;
- la zone 16 de pilotage du moteur à partir des paramétrages usines tels que vitesse et durée de l'amorçage de l'actionnement du freinage et de la mise en arrêt d'une part et d'autre part des paramétrages utilisateurs d'initialisation de la durée et de la course d'ouverture et de fermeture des panneaux coulissants. Le pilotage comporte également des paramétrages usines de secours, d'anti-effraction, d'anti-pincement, de mise en veille et de régulation du courant du moteur pour adapter la puissance à l'effort requis ;
- la zone 17 de contrôle permanent de l'état du moteur 2, position, courant, couple, température pour générer des informations de pilotage selon des paramètres prédéfinis ;
- la zone 18 est une zone de commande filaire activable par le branchement d'une commande par fil de liaison ;
- la zone 19 de commande à distance par émission, réception d'ondes radio, WIFI, infra rouge et/ou par relayage d'impulsions téléphoniques ;
- la zone 20 est une unité centrale à processeur pour la gestion, le contrôle et le pilotage des zones 11 de la carte, leur interaction et leur état de fonctionnement ;
- la zone 21 est une zone d'incrémentation gérant les informations captées par le capteur à effet Hall 22 retenu pour sa très faible consommation et l'incrémenteur ferrite 16 pôles 23 retenu pour son extrême précision.

Les zones 20 et 21, de par leur conception et combinaison, permettent l'exécution de protocole précis au mm près partant permettent un pilotage fin et un protocole de sécurité fiable qui, avantageusement, concourt à la durée de vie de l'ensemble de motorisation.

Les zones 12, 13, 14 sont conçues pour être supportées par une autre carte appelée fille et dans un autre mode de réalisation intégrée à un boîtier de batteries 27 séparé.

Le boîtier 1 de regroupement selon l'invention comporte au moins les éléments suivants :
- une carte mère 10 comportant toutes les zones fonctionnelles 11 programmables ou non et les dispositifs électriques et/ou électroniques voire mécaniques correspondants ;
- pour chaque dispositif électrique et/ou électronique et/ou mécanique, une zone fonctionnelle 11 aux fins de réception, de stockage, de traitement, d'émission, de contrôle des données numérisées pour commander et piloter lesdits dispositifs associés ou non ;
- une zone d'alimentation 12 de secours du moteur 2 ;
- une zone de contrôle 13 de l'état de la batterie et du pilotage de la sécurité de la batterie ;
- une zone de prévention 14 de dysfonctionnement par dispositif émetteur de lumière dit L.E.D. ou bruiteur et de commande d'initialisation par bouton-poussoir et de sonde de température ;
- une zone 15 d'alimentation du moteur 2 et des batteries à partir du secteur réseau public, de transformation en tension 6 volts à courant continu ;
- une zone 16 de pilotage du moteur 2, des sécurités, des paramètres de fonctionnement et tout autre paramètre ;
- une zone 17 de contrôle de l'état du moteur ;
- une zone 18 de commande filaire ;
- une zone 19 de commande à distance avec une interface émetteur récepteur d'ondes radio, WIFI, infra rouge, téléphone ;
- une zone 20 CPU avec processeur pour le pilotage, la gestion centralisée des zones fonctionnelles 11;
- une zone 21 comportant les dispositifs d'incrémentation avec un capteur à effet Hall 22 et un incrémenteur 23 ferrite à 16 pôles d'une part et l'interface de capture et de traitement des impulsions générées par le capteur 23 ;
   lesdites zones 11 étant conçues pour pouvoir autant que de besoin être déportées seules ou combinées de la carte mère sur des cartes filles lesquelles peuvant être exportées entre autres dans le boîtier d'alimentation de secours.

Avantageusement, une telle conception permet de parler d'un boîtier 1 conférant à une application telle que système de volets coulissants motorisés, un automatisme, une réelle autonomie, une intelligence artificielle quant à sa capacité d'autocontrôle et de pilotage automatique en cas de dangers à l'ouverture et/ou à la fermeture, ou encore en cas d'incident dans tout ou partie des dispositifs fonctionnels, mécaniques et électriques.

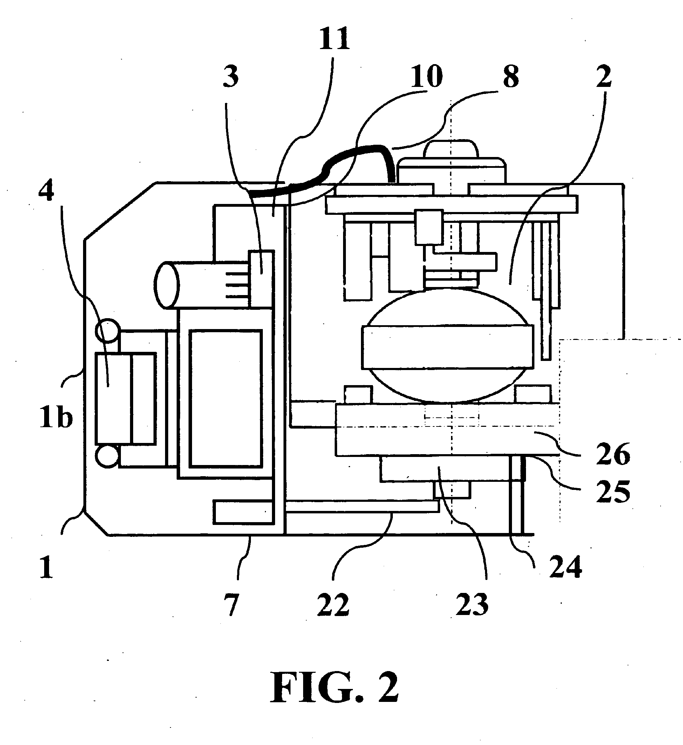

Selon la figure 2, le boîtier 1 présente une aile 24 de logement de l'incrémenteur 23 et de son capteur à effet Hall 22. La conception de cette aile permet de réaliser un siège 25 pour solidariser, positionner et indexer le positionnement sur un boîtier de connexion tel que réducteur 26.

La conformation du boîtier 1 avec son aile 24 est telle que la compacité de l'ensemble permet d'envisager le boîtier 1 partie intégrante d'un ensemble de motorisation.

Avantageusement, l'invention permet dans de tels ensembles de réduire les coûts, le nombre de pièces et accessoires, la marge d'erreur de montage et d'installation de façon significative, ce qui permet l'utilisation par des non professionnels.

Le boîtier 1 selon l'invention présente une aile de logement 24 du dispositif d'incrémentation 22 et 23 et conformée pour former siège de positionnement 25 indexé et moyen de fixation à un boîtier 26 audit moteur 2.

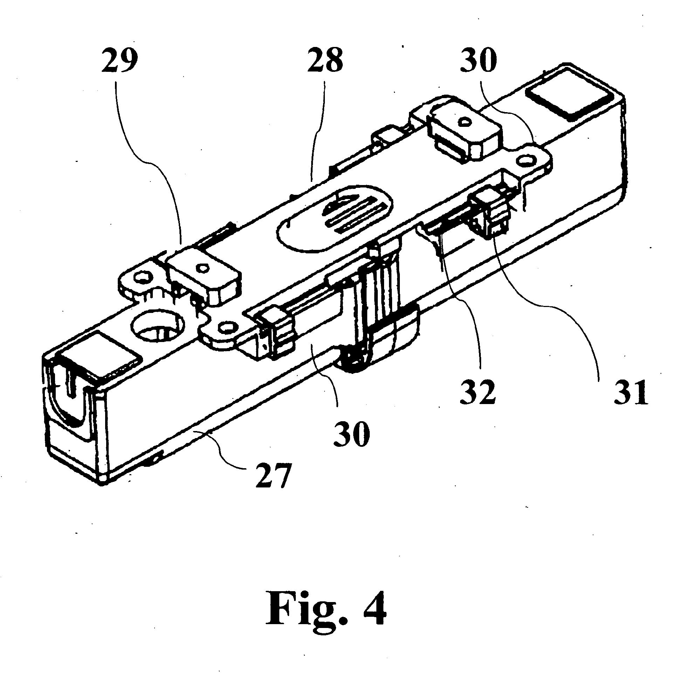

Selon la figure 4, l'invention selon un mode de réalisation comporte un boîtier 27 étanche et inviolable de stockage de batterie et/ou de piles. Le boîtier 27 est solidarisé sur un support fixe tel que rail ou mur via semelle de fixation 28 conformée pour s'insérer dans l'ouverture d'un rail avec des moyens de fixation 29 dans ledit rail. Ces moyens 29 sont des écrous filetés formant boutonnière avec la lumière du rail. Le vissage dans le sens du serrage fait pivoter ces écrous dans la lumière du rail de guidage dans lequel les écrous se bloquent pour terminer le vissage et le serrage de la semelle 28, des moyens complémentaires 30 de fixation autorisent la fixation de la semelle sur des surfaces planes.

La semelle 28 est rendue solidaire du boîtier 27 au moyen des tirettes 31 accouplant et serrant des lèvres 32 solidaires des parois latérales du boîtier et des côtés de la semelle.

Ledit boîtier 27 contient des piles connectées à un bornier recevant les piles d'alimentation de la batterie par le secteur et/ou par des panneaux solaires. Le boîtier 27 est relié au boîtier 1 par un fil de liaison 6 serti dans le boîtier 27 et comportant un connecteur de branchement avec des moyens détrompeurs avec le boîtier 1.

Selon un mode de réalisation, le boîtier peut contenir une carte fille recevant les zones 12 et/ou 13 et/ou 14. Avantageusement, la conception du boîtier 27 permet son emplacement dans un rail porteur au droit de l'ouverture où il reste visible et/ou audible et accessible. Visible et/ou audible pour noter un dysfonctionnement et accessible pour initialiser le système de volets coulissants automatisé, pour changer le bloc ou les batteries le cas échéant. La compacité de ce bloc autonome d'alimentation de secours permet de le masquer sous des capots de rails et ne gène en rien le déplacement des montures et galets des volets coulissants dans le rail porteur. La charge des batteries est dite en floating, à savoir permanente et relayée par les panneaux solaires.

L'invention permet, vu la conception du boîtier et son emplacement potentiel sur le rail porteur en son milieu de la longueur et du moins de la longueur de la course, de lui adjoindre un dispositif 33 de retenue et de guidage des courroies de transmission du mouvement de la poulie 34 aux montures à galets des volets coulissants.

Avantageusement, dans le cas de grandes longueurs de rail, particulièrement de course, le dispositif 33 évite que ces courroies pendent et deviennent visibles par-dessous le niveau inférieur du capot du rail porteur. Les moyens 33 sont clipsés de part et d'autre sur les parois latérales du boîtier 27 au moyen de coulisses à ailes repliées dans lesquelles sont glissé les moyens correspondants du dispositif 33.

Le boîtier de regroupement 1 selon l'invention comporte un boîtier étanche inviolable complémentaire 27d'énergie de secours qui dispose de moyens de fixation 28, 29 sur le rail ou sur le mur pour conserver visible et audible les moyens d'alarme de diodes émettrices de lumière dites L.E.D. ou du bruiteur et encore pour être accessible avec le bouton 14 d'initialisation du système installé, ledit boîtier logeant une carte fille 12, 13, 14 comportant les moyens d'alarme, d'initialisation, de connexion, d'alimentation et liaison 6 avec la carte mère 10 et les panneaux solaires et accessoirement des moyens 33 de retenue et de guidage de la courroie, lesdits moyens 33 étant solidaires des parois du boîtier 27 des batteries et amovibles.

En finalité et avantageusement, l'invention présente un boîtier de regroupement 1, lequel offre outre des services de commandes variés au choix, des automatismes ou prévention de secours et anti-effraction, une autonomie réelle en alimentation de secours (batterie) et autonome avec l'utilisation de panneaux solaires.

Avantageusement, le tout est compact apte à être logé dans un rail et/ou sous le capot bandeau enjoliveur et associable à d'autres éléments de la motorisation tels que moteur 2 et/ou réducteur 26, sans nuire à l'encombrement pour réaliser un ensemble compact.

L'utilisation d'un boîtier de regroupement 1 selon l'invention conforme à l'une quelconque des réalisations précédentes lié à un moteur 2 et à un boîtier réducteur 26 pour l'automatisation et l'asservissement d'un système d'actionnement d'un volet coulissant.

Bien que l'invention ait été décrite en liaison avec des structures particulières, elle n'y est nullement limitée et on peut y apporter de nombreuses variantes.

Les combinaisons des différentes réalisations représentées sur les dessins ou décrites ci-dessus ne sortent pas du cadre de l'invention.

### Signes de référence

- 1.: boîtier de regroupement
- 1 a: coque carter
- 1 b: coque carter
- 2.: moteur
- 3.: bornier de connexion
- 4.: transformateur
- 5.: fil réseau secteur
- 6.: fil réseau secours
- 7.: antenne
- 8.: fil d'alimentation du moteur
- 9.: carte mère circuit
- 10.: embase unique carte mère
- 11.: zones fonctionnelles/moyens programmables
- 12.: zone d'alimentation de secours du moteur
- 13.: zone de contrôle batterie et pilotage sécurité batterie
- 14.: zone L.E.D de prévention, bouton d'initialisation et sonde température
- 15.: zone d'alimentation du réseau et transformateur 6 volts
- 16.: zone de pilotage du moteur, des sécurités, des paramètres
- 17.: zone de contrôle de l'état du moteur
- 18.: zone de commande filaire
- 19.: zone de commande à distance (radio, téléphone)
- 20.: zone unité centrale à processeurs pour la gestion, le contrôle des zones de la carte mère, leurs interactions, leur état de fonctionnement/moyens programmables.
- 21.: zone d'incrémentation
- 22.: capteur à effet Hall à faible consommation
- 23.: incrémenteur ferrite à 16 pôles
- 24.: aile de logement
- 25.: siège de positionnement fixation indexation
- 26.: réducteur
- 27.: boîtier des batteries
- 28.: semelle de fixation
- 29.: moyens de fixation boutonnière dans le rail
- 30.: moyens complémentaires de fixation
- 31.: tirettes
- 32.: lèvres
- 33.: dispositif de retenue et de guidage
- 34.: poulie

Les signes de référence insérés après les caractéristiques techniques mentionnées dans les revendications ont pour seul but de faciliter la compréhension de ces dernières et n'en limitent aucunement la portée.

## Revendications

1. Boîtier de regroupement (1) de dispositifs électriques pour au moins l'alimentation d'un moteur (2) d'actionnement d'au moins un panneau coulissant comportant au moins un bomier de connexion (3) interne, des fils d'alimentation (5, 6, 8), un brin d'antenne (7), les fils d'alimentation (5, 6, 8) et le brin d'antenne étant reliés au bornier de connexion (3) interne, au moins un interrupteur pour ouvrir et fermer le circuit d'alimentation du moteur, et au moins un transformateur (4) pour servir via un des fils d'alimentation (8) une basse tension d'alimentation audit moteur (2), un dispositif d'incrémentation sous forme d'un incrémenteur (23) en ferrite de 16 pôles, une aile de logement (24) de l'incrémenteur (23) conformée pour former un siège de positionnement indexé et un moyen de fixation du boîtier de regroupement (1) à un boîtier de connexion (26) connectable audit moteur (2), deux coques (1a, 1b) dont le mode de fermeture est étanche et inviolable, formant le carter de tout dispositif électrique et/ou électronique sertissant les fils d'alimentation (5, 6, 8) et le brin d'antenne (7), boîtier dont le raccordement audit bomier de connexion (3) interne et solidaire d'une embase unique (10) inviolable, ladite embase (10) étant apte à former support de tout dispositif électrique et/ou électronique et est rendue solidaire des parois internes des coques des carters (1a, 1b) une fois fermés, aux fins de constituer un ensemble unique autonome et former partie d'un ensemble de motorisation.

2. Boîtier 1 suivant la revendication 1 comportant au moins les éléments suivants :
- une carte mère 10 comportant toutes les zones fonctionnelles 11 programmables ou non et les dispositifs électriques et/ou électroniques voire mécaniques correspondant ;
- pour chaque dispositif électrique et/ou électronique et/ou mécaniques, une zone fonctionnelle 11 aux fins de réception, de stockage , de traitement, d'émission, de contrôle des données numérisées pour commander et piloter lesdits dispositifs associés ou non ;
- une zone d'alimentation 12 de secours du moteur 2 ;
- une zone 15 d'alimentation du moteur 2 et des batteries à partir du secteur réseau public, de transformation en tension 6 volts à courant continu ;
- une zone 16 de pilotage du moteur 2, des sécurités, des paramètres de fonctionnement et tout autre paramètre ;
- une zone 19 de commande à distance avec une interface émetteur récepteur d'ondes radio, WIFI, infra rouge, téléphone ;
- une zone 20 CPU avec processeur pour le pilotage la gestion centralisée des zones fonctionnelles 11 ;
- une zone 21 comportant les dispositifs d'incrémentation avec un capteur à effet Hall 22 et un incrémenteur 23 ferrite à 16 pôles d'une part et l'interface de capture et de traitement des impulsions générées par le capteur 23 ;
- lesdites zones 11 étant conçues pour être déportées seules ou combinées de la carte mère sur des cartes filles lesquelles peuvent être exportées entre autres dans le boîtier d'alimentation de secours.

3. Boîtier (1). suivant la revendication 1 comportant au moins les éléments suivants :
- une carte mère (10) comportant toutes les zones fonctionnelles (11) programmables ou non et les dispositifs électriques et/ou électroniques voire mécaniques correspondant ;
- pour chaque dispositif électrique et/ou électronique et/ou mécaniques, une zone fonctionnelle (11) aux fins de réception, de stockage, de traitement, d'émission, de contrôle des données numérisées pour commander et piloter lesdits dispositifs associés ou non ;
- une zone d'alimentation (12) de secours du moteur (2) ;
- une zone de contrôle (13) de l'état de la batterie et du pilotage de la sécurité de la batterie ;
- une zone de prévention (14) de dysfonctionnement par dispositif émetteur de lumière dit L.E.D. ou bruiteur et de commande d'initialisation par bouton-poussoir et de sonde de température ;
- une zone (15) d'alimentation du moteur (2) et des batteries à partir du secteur réseau public, de transformation en tension 6 volts à courant continu ;
- une zone (16) de pilotage du moteur (2), des sécurités, des paramètres de fonctionnement et tout autre paramétre ;
- une zone (17) de contrôle de l'état du moteur ;
- une zone (18) de commande filaire ;
- une zone (19) de commande à distance avec une interface émetteur récepteur d'ondes radio, WIFI, infra rouge, téléphone ;
- une zone (20) CPU avec processeur pour le pilotage, la gestion centralisée des zones fonctionnelles 11 ;
- une zone (21) comportant les dispositifs d'incrémentation avec un capteur à effet Hall (22) et un incrémenteur (23) ferrite à (16) pôles d'une part et l'interface de capture et de traitement des impulsions générées par le capteur (23) ;
- lesdites zones (11) étant conçues pour être déportées seules ou combinées de la carte mère sur des cartes filles lesqueles peuvent être exportées entre autres dans le boîtier d'alimentation de secours

4. Boîtier selon l'une des revendications précédentes comportant un boîtier étanche inviolable complémentaire 27 d'énergie de secours qui dispose de moyens de fixation 28, 29 sur le rail ou sur le mur pour conserver visible et audible les moyens d'alarme de diodes émettrices de lumière dites L.E.D. ou du bruiteur et encore pour être accessible avec le bouton d'initialisation du système installé, ledit boîtier logeant une carte fille 12, 13, 14 comportant les moyens d'alarme d'initialisation, de connexion, d'alimentation et de liaison 6 avec la carte mère 10 et les panneaux solaires et accessoirement des moyens 33 de retenue et de guidage de la courroie, lesdits moyens 33 étant solidaires des parois du boîtier 27 des batteries et amovibles.

5. Utilisation d'un boîtier de regroupement 1 selon l'invention conforme à l'une quelconque des revendications précédentes lié à un moteur 2 et à un boîtier réducteur 26 pour l'automatisation et l'asservissement d'un système d'actionnement d'un volet coulissant.

## Claims

1. Box (1) for grouping together electrical devices for at least providing the power supply to one motor (2) driving at least one sliding panel and consisting of at least one internal terminal block (3), a number of power supply leads (5, 6, 8), an antenna cord (7), the power supply leads (5, 6, 8) and the antenna cord being connected to the internal terminal block (3), as well as at least one switch to open and close the motor supply circuit, at least one transformer (4) to provide via one of the power supply leads (8) a low voltage power supply to the said motor (2), an incrementing device in the form of a 16-pole ferrite incrementer (23), a part housing (24) the incrementer (23) adapted to form an indexed positioning seat and a means of fastening the grouping box (1) to a connection box (26) connectable to the said motor (2), two shells (1a, 1b) whose method of closure is sealed and tamperproof, forming the casing of any electrical and/or electronic device, crimping the power supply leads (5, 6, 8) and the antenna cord (7), box whose connection to the said internal terminal block (3) is integral with a single tamperproof base (10), the said base (10) being adapted to act as the support for any electrical and/or electronic device and which is rendered integral with inner walls of the casing shells (1a, 1b) once closed, for the purpose of forming a single independent unit and forming part of a drive unit.

2. Box 1 according to claim 1 including at least the following components:
- a mother board 10 including all the functional zones 11, programmable or not, and the corresponding electrical and/or electronic and even mechanical devices;
- for each electrical and/or electronic and/or mechanical device, a functional zone 11 for the purposes of the receipt, storage, processing, transmission, control of the digitised data to command and control the said devices, associated or not;
- a backup power supply zone 12 for the motor 2;
- a zone 15 for supplying power to the motor 2 and batteries from the public mains network, and transforming it into a 6 Volt direct current voltage;
- a zone 16 for controlling the motor 2, the safety devices, the operating parameters and any other parameter;
- a remote control zone 19 with a transmitter receiver interface for radio, WIFI, infrared and telephone waves;
- a CPU zone 20 with a processor for the control and centralised management of the functional zones 11;
- a zone 21 including the incrementation devices with a Hall effect sensor 22 and a ferrite 16-pole incrementer 23, on the one hand, and the interface for capturing and processing impulses generated by the sensor 23;
- the said zones 11 being designed to be offset alone or combined from the mother board on daughter boards which can be exported among other possibilities into the backup power supply box.

3. Box (1) according to claim 1 including at least the following components:
- a mother board (10) including all the functional zones (11), programmable or not, and the corresponding electrical and/or electronic and even mechanical devices;
- for each electrical and/or electronic and/or mechanical device, a functional zone (11) for the purposes of the receipt, storage, processing, transmission, control of the digitised data to command and control the said devices, associated or not;
- a backup power supply zone (12) for the motor (2);
- a zone (13) for checking the status of the battery and controlling battery security;
- a malfunction prevention zone (14) with a light-emitting diode, known as a LED, or buzzer, with initialisation by a pushbutton, and with a temperature probe;
- a zone (15) for supplying power to the motor (2) and batteries from the public mains network, and transforming it into a 6 Volt direct current voltage;
- a zone (16) for controlling the motor (2), the safety devices, the operating parameters and any other parameter;
a zone (17) for checking the status of the motor;
- a wired control zone (18);
a remote control zone (19) with a transmitter receiver interface for radio, WIFI, infrared and telephone waves;
- a CPU zone (20) with a processor for the control and centralised management of the functional zones (11);
- a zone (21) including the incrementation devices with a Hall effect sensor (22) and a ferrite 16-pole incrementer (23) on the one hand and the interface for capturing and processing impulses generated by the sensor (23);
- the said zones (11) being designed to be offset alone or combined from the mother board on daughter boards which can be exported among other possibilities into the backup power supply box

4. Box according to any one of the preceding claims consisting of a complementary sealed tamperproof box 27 providing a backup energy supply, which has means 28, 29 of fastening it on the rail or onto the wall so that the means of alarm with light-emitting diodes, known as Lends, or a buzzer remain visible and audible and also so that it is accessible with the system initialisation button installed, the said box containing a daughter board 12, 13, 14 including the means of alarm, initialisation, connection, power supply and linking 6 with the mother board 10 and the solar panels and secondarily also means 33 of holding and guiding the belt, the said means 33 being integral with the walls of the battery box 27 and removable.

5. Use of a grouping box 1 according to the invention and in accordance with any one of the preceding claims linked to a motor 2 and a reduction gear box 26 for automating and controlling a system operating a sliding shutter.

## Patentansprüche

1. Gruppiergehäuse (1) bei elektrischen Vorrichtungen zumindest zur Stromversorgung eines Motors (2) zur Betätigung von mindestens einem Schiebepaneel, welches mindestens ein innen liegendes Klemmenbrett (3) für den Anschluss, Zuleitungsdrähte (5, 6, 8) und ein Antennenglied (7) aufweist, wobei die Zuleitungsdrähte (5, 6, 8) und das Antennenglied mit dem innen liegenden Klemmenbrett (3) für den Anschluss verbunden sind, ferner mindestens einen Schalter zum Öffnen und Schließen des Stromversorgungskreises für den Motor, mindestens einen Transformator (4), um den Motor (2) über einen der Zuleitungsdrähte (8) mit einer Niederspannung zu versorgen, und außerdem eine Weiterschaltvorrichtung in Form eines Schrittschalters (23) aus Ferrit mit 16 Polen, einen Trägerflansch (24) zur Aufnahme des Schrittschalters (23), der so ausgebildet ist, dass er einen Sitz zur indexierte Positionierung bildet, und eine Einrichtung zur Befestigung des Gruppiergehäuses (1) an einem Steckergehäuse (26), das mit dem Motor (2) verbindbar ist, und zwei Schalen (1a, 1b), die dicht und unverletzlich verschließbar sind und das Gehäuse der gesamten elektrischen und/oder elektronischen Vorrichtung bilden, wobei sie die Zuleitungsdrähte (5, 6, 8) und das Antennenglied (7) durch Crimpen oder Falzen verschließen, wobei das Gehäuse an dem innen liegenden Klemmenbrett (3) für den Anschluss angeschlossen und fest mit einem unverletzlichen einzigen Sockel (10) verbunden ist, wobei der Sockel (10) so ausgelegt ist, dass er einen Träger für jede elektrische und/oder elektronische Vorrichtung bildet und einteilig mit den Innenwandungen der Schalen des Gehäuses (1a, 1b) verbunden ist, sobald diese geschlossen sind, um so eine einzige unabhängige Baugruppe zu bilden, die Teil einer Baugruppe für den motorischen Antrieb ist.

2. Gehäuse (1) nach Anspruch 1, welches zumindest die folgenden Bauteile aufweist:
- eine Hauptplatine (10), welche alle Funktionsbereiche (11) aufweist, die programmierbar oder nicht programmierbar sind, sowie die entsprechenden elektrischen und/oder elektronischen und auch mechanischen Vorrichtungen umfasst;
- für jede elektrische und/oder elektronische und/oder mechanische Vorrichtung einen Funktionsbereich (11) zum Zwecke des Empfangs, der Speicherung, der Verarbeitung, der Aussendung, der Steuerung von digitalisierten Daten zur Steuerung und Vorsteuerung der gegebenenfalls zugeordneten Vorrichtungen;
- einen Versorgungsbereich (12) für die Notstromversorgung des Motors (2);
- einen Bereich (15) zur Stromversorgung des Motors (2) und der Batterien aus dem öffentlichen Stromnetz und zur Umwandlung desselben in eine Gleichstromspannung von 6 Volt;
- einen Bereich (16) zur Vorsteuerung des Motors (2), der Sicherheitseinrichtungen, der Betriebsparameter und jedes anderen Parameters;
- einen Bereich (19) zur Fernsteuerung mit einer Schnittstelle zum Senden und Empfangen von Funkwellen, WIFI, infrarotwellen und Telefonsignalen;
- einen CPU-Bereich (20) mit einem Prozessor zur Vorsteuerung und zentralisierten Lenkung des Betriebs der Funktionsbereiche (11);
- einen Bereich (21), welcher Vorrichtungen zur Schrittschaltung mit einem Halleffektsensor (22) und einem Ferrit-Schrittschalter (23) mit 16 Polen einerseits und der Schnittstelle zur Erfassung und Verarbeitung der vom Sensor (23) erzeugten Impulse aufweist;
- wobei die Bereiche 11 so ausgelegt sind, dass sie allein oder in Verbindung mit der Hauptplatine auf Tochterkarten verlagerbar sind, welche unter anderem in dem Gehäuse zur Notromversorgung exportiert werden können.

3. Gehäuse (1) nach Anspruch 1, welches zumindest die folgenden Bauteile aufweist,
- eine Hauptplatine (10), welche alle Funktionsbereiche (11) aufweist, die programmierbar oder nicht programmierbar sind, sowie die entsprechenden elektrischen und/oder elektronischen und auch mechanischen Vorrichtungen umfasst;
- für jede elektrische und/oder elektronische und/oder mechanische Vorrichtung einen Funktionsbereich (11) zum Zwecke des Empfangs, der Speicherung, der Verarbeitung, der Aussendung, der Steuerung von digitalisierten Daten zur Steuerung und Vorsteuerung der gegebenenfalls zugeordneten Vorrichtungen;
- einen Versorgungsbereich (12) für die Notstromversorgung des Motors (2);
- einen Kontrollbereich (13) zum Kontrollieren des Batteriezustands und der Vorsteuerung der Batteriesicherheit;
- einen Bereich (14) zur Verhinderung von Betriebsstörungen durch eine als LED bezeichnete Lichtsendeeinrichtung bzw einen Rasselsender und zur Steuerung der Initialisierung mittels einer Schaltfläche und eines Temperaturfühlers,
- einen Bereich (15) zur Stromversorgung des Motors (2) und der Batterien aus dem öffentlichen Stromnetz und zur Umwandlung des Stroms in eine Gleichstromspannung von 6 Volt;
- einen Bereich (16) zur Vorsteuerung des Motors (2), der Sicherheitseinrichtungen, der Betriebsparameter und jedes anderen Parameters;
- einen Bereich (17) zur Kontrolle des Motorzustands;
- einen Bereich (18) zur Steuerung der Drahtleitungen,
- einen Bereich (19) zur Fernsteuerung mit einer Schnittstelle zum Senden und Empfangen von Funkwellen, WIFI, Infrarotwellen und Telefonsignalen;
- einen CPU-Bereich (20) mit einem Prozessor zur Vorsteuerung und zentralisierten Lenkung des Betriebs der Funktionsbereiche (11):
- einen Bereich (21), welcher Vorrichtungen zur Schrittschaltung mit einem Halleffektsensor (22) und einem Ferrit-Schrittschalter (23) mit (16) Polen einerseits und der Schnittstelle zur Erfassung und Verarbeitung der vom Sensor (23) erzeugten Impulse aufweist;
- wobei die Bereiche 11 so ausgelegt sind, dass sie allein oder in Verbindung mit der Hauptplatine auf Tochterkarten verlagerbar sind, welche unter anderem in dem Gehäuse zur Notromversorgung exportiert werden können.

4. Gehäuse nach einem der vorhergehenden Ansprüche, welches ein zusätzliches unverletzliches dichtes Gehäuse (27) für den Notstrom aufweist, welches mit Einrichtungen zur Befestigung (28, 29) auf der Schiene oder an der Wand ausgerüstet ist, um die Alarmeinrichtungen mit Lichtsendedioden bzw so genannte LEDs oder eines Rasselsenders sichtbar und hörbar zu halten und auch um mit dem Knopf zur Initialisierung des eingebauten Systems zugänglich zu sein, wobei in dem Gehäuse eine Tochterkarte (12, 13, 14) aufgenommen ist, welche Alarmeinrichtungen und Einrichtungen zur Initialisierung, zur Verbindung, zur Stromversorgung und für die Verbindung (6) mit der Hauptplatine (10) und den Solarplatten und ergänzend die Einrichtungen (33) zum Halten und Führen des Riemens aufweist, wobei die Einrichtungen (33) fest mit den Wandungen des Gehäuses (27) mit den Batterien verbunden und abnehmbar sind.

5. Verwendung eines erfindungsgemäßen Gruppiergehäuses (1) nach einem der vorhergehenden Ansprüche, das zur Automatisierung und Regelung eines Systems zur Betätigung eines Schiebepaneels mit einem Motor (2) und einem Untersetzungsgetriebe (26) verbunden ist.
